(19) **Europäisches Patentamt**

**European Patent Office**

**Office européen des brevets**

(11) Veröffentlichungsnummer: **0 273 138 B1**

(12) ## EUROPÄISCHE PATENTSCHRIFT

(45) Veröffentlichungstag der Patentschrift: **22.01.92**

(21) Anmeldenummer: **87116066.9**

(22) Anmeldetag: **31.10.87**

(51) Int. Cl.⁵: **H04N 7/087**

(54) Einrichtung zur Decodierung eines Satelliten-Fernsehsignals.

(30) Priorität: **04.12.86 DE 3641406**

(43) Veröffentlichungstag der Anmeldung:
**06.07.88 Patentblatt 88/27**

(45) Bekanntmachung des Hinweises auf die
Patenterteilung:
**22.01.92 Patentblatt 92/04**

(84) Benannte Vertragsstaaten:
**DE FR GB IT**

(56) Entgegenhaltungen:
**EP-A- 0 059 666**
**EP-A- 0 112 589**
**GB-A- 1 486 774**
**GB-A- 2 054 328**
**GB-A- 2 126 002**

**FERNSEH- UND KINOTECHNIK, Band 39, Nr. 10, Oktober 1985, Seiten 472-480, Heidelberg, DE; U. MESSERSCHMID: "Fernsehnormen für Rundfunksatelliten - Das D2-MAC/Paket-Verfahren in der MAC-Systemfamilie"**

**IEEE TRANSACTIONS ON CONSUMER ELECTRONICS, Band CE-25, Nr. 3, Juli 1979, Seiten 246-250, IEEE; N.E. TANTON: "UK teletext - evolution and potential"**

(73) Patentinhaber: **GRUNDIG E.M.V. Elektro-Mechanische Versuchsanstalt Max Grundig**
**Kurgartenstrasse 37**
**W-8510 Fürth(DE)**

(72) Erfinder: **Hegendörfer, Max, Dipl.-Ing. Grundig E.M.V.**
**Max Grundig holländ. Stiftung & Co.KG**
**Kurgartenstrasse 37 D-8510 Fürth/Bay(DE)**

**Beschreibung**

Die Erfindung betrifft eine Einrichtung mit den im Oberbegriff des Anspruchs 1 angegebenen Merkmalen.

Aus der Zeitschrift "IEEE Transactions on Consumer Electronics", Vol. CE-25, No. 3, July 1979, S. 246-250, ist es bereits bekannt, auf verschiedenen Videotextseiten verschiedensprachige Untertitel zu einer Fernsehsendung zu übertragen, welche vom Benutzer auf Wunsch zugeschaltet oder wieder abgeschaltet werden können.

In der Patentanmeldung EP-A-0 239 760 (Art. 54 (3) EPÜ) der Anmelderin wird vorgeschlagen, zum Empfang von Satelliten-Fernsehsignalen, bei denen die den Bildinhalt begleitende Sprachinformation simultan in verschiedenen Sprachen übertragen wird, den einzelnen Sprachen unterschiedliche Prioritäten zuzuordnen (Prioritätsprogrammierung) und diese Prioritätszuordnung im Empfangsgerät abzuspeichern. Das Empfangsgerät sucht bei der Wiedergabe automatisch unter Auswertung einer zusätzlich zur Bild- und Sprachinformation übertragenen Kenninformation, welche die einzelnen Sprachen charakterisiert, die Sprache mit der höchsten Priorität heraus. Folglich wird dem Benutzer beim Empfang von Satelliten-Fernsehsignalen mit Mehrsprachenton stets automatisch diejenige Sprache angeboten, die für ihn die jeweils höchste Priorität besitzt.

Ferner wird in der oben genannten Patentanmeldung vorgeschlagen, mittels eines Videotextdecoders bestimmte Videotextseiten, welche im Rahmen des Videotextdienstes übertragen werden und welche Untertitel zu der momentan gesendeten Bildinformation in einer weiteren beliebigen Sprache enthalten, zu decodieren, in das zugehörige Bildsignal einzublenden und zusammen mit diesem wiederzugeben bzw. aufzuzeichnen. Bei diesem Ausführungsbeispiel wird dann eine erste, das Bildsignal begleitende Sprache "akustisch" und eine zweite Sprache in Form von Untertiteln "visuell" wiedergegeben.

In bestimmten Fällen kann es nun wünschenswert sein, individuell für jede Sendung unabhängig von der Prioritätsprogrammierung entscheiden zu können, ob, und ggfs. in welcher Sprache, eine Wiedergabe bzw. Aufzeichnung von Untertiteln zusätzlich zum Bildinhalt erfolgen soll.

Der Erfindung liegt demzufolge die Aufgabe zugrunde, eine Einrichtung der im Oberbegriff des Anspruchs 1 angegebenen Art derart weiterzubilden, daß unabhängig von der Prioritätsprogrammierung individuell für jede Sendung entschieden werden kann, ob, und ggfs. in welcher Sprache, eine Wiedergabe bzw. Aufzeichnung von Untertiteln zusätzlich zum Bildinhalt erfolgen soll.

Diese Aufgabe wird bei eines Einrichtung des eingangs gennanten Art durch die im kennzeichnenden Teil des Anspruchs 1 angegebenen Merkmale gelöst. Vorteilhafte Ausgestaltungen der Erfindung ergeben sich aus den abhängigue Ansprüchen.

Die Vorteile der Erfindung liegen insbesondere darin, daß ein Benutzer der beanspruchten Einrichtung kurzfristig entscheiden kann, ob und welche Untertitel er in das wiedergegebene Bild eingeblendet haben will bzw. ob er die Untertitel zusammen mit dem Bildinhalt aufgezeichnet haben will oder nicht. Diese Entscheidung gilt nur für eine einzige Fernsehsendung oder aber nur für bestimmte Teile einer solchen.

Die Erfindung ist beispielsweise dann vorteilhaft, wenn ein Mitglied einer Zuschauerfamilie gehörgeschädigt ist und Untertitel nur dann eingeblendet werden sollen, wenn das gehörgeschädigte Familienmitglied gerade anwesend ist.

Die Erfindung ist ferner dann vorteilhaft, wenn die Mitglieder einer Zuschauerfamilie unterschiedliche Sprachkenntnisse besitzen und die Entscheidung darüber, ob Untertitel eingeblendet bzw. aufgezeichnet werden sollen oder nicht, davon abhängig gemacht werden soll, wer gerade anwesend ist bzw. für wen die Aufzeichnung angefertigt wird.

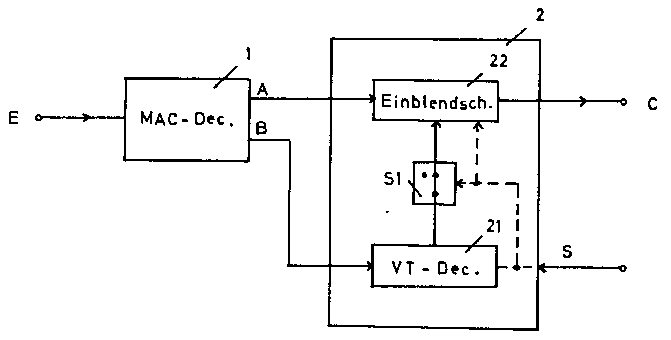

Weitere vorteilhafte Eigenschaften der Erfindung ergeben sich aus einem Ausführungsbeispiel, welches im folgenden anhand der einzigen Figur näher erläutert wird.

Dem Eingang E der Einrichtung wird ein Satelliten-Fernsehsignal zugeführt, in dessen vertikaler Austastlücke eine Videotextinformation übertragen wird, welche nach entsprechender Verarbeitung als Untertitel in den auf einem Fernsehbildschirm darstellbaren bzw. auf einem Aufzeichnungsträger aufzeichenbaren Bildinhalt eingeblendet werden kann.

Das Satelliten-Fernsehsignal wird einer herkömmlichen Schaltung 1 zur Verarbeitung zugeführt, beispielsweise einem Satelliten-Signaldecoder und wird dort in grundsätzlich bekannter Weise behandelt. Am Ausgang A der Schaltung 1 liegt ein decodiertes Videosignal (FBAS) und am Ausgang B der Schaltung 1 ein teletextkompatibles Datensignal an. Das decodierte Videosignal wird einer Schaltung 2 zugeführt und gelangt dort an eine Einblendschaltung 22.

Das teletextkompatible Datensignal gelangt an den Videotextdecoder 21 der Schaltung 2. Befindet sich ein der Schaltung 2 zugeführtes Steuersignal S in einem ersten Zustand, so extrahiert der Videotextdecoder die gewünschte, durch das Steuersignal S spezifizierte Videotextseite bzw. -tafel aus dem in den vertikalen Austastlücken des Satelliten-Fernsehsignals übertragenen Videotextangebot und decodiert sie. Diese Seite enthält im vorliegenden Fall eine den Bildinhalt begleitende Sprachinformation.

Die decodierte Sprachinformation wird ebenfalls der Einblendschaltung 22 zugeführt und dort in das Ausgangssignal der Schaltung 1 (FBAS-Signal) eingeblendet bzw. eingetastet. Das Ausgangssignal der Einblendschaltung 22 kann entweder auf dem Bildschirm eines Fernsehempfänges dargestellt oder magnetisch aufgezeichnet werden.

Befindet sich das der Schaltung 2 zugeführte Steuersignal S in einem zweiten Zustand, so wird die Einblendung von Untertiteln unterbunden und das am Eingang A der Schaltung 2 anliegende Signal unverändert dem Ausgang C zugeführt.

Das Steuersignal S, welches beispielsweise durch Betätigung einer Taste einer Fernbedienung initiiert werden kann, kann zur Unterbindung der Einblendung entweder dem Videotextdecoder 21 oder der Einblendschaltung 22 zugeführt werden und diese aktivieren bzw. deaktivieren.

Alternativ hierzu ist es natürlich ebenso möglich, den Signalweg des Videotextsignals in Ansprache auf das Steuersignal entweder vor oder hinter dem Videotextdecoder zu unterbrechen, beispielsweise mittels eines Schalter S 1.

Die beanspruchte Einrichtung kann sowohl verwendet werden, wenn eine Satelliten-Fernsehsendung "live" auf einem Fernsehempfänger betrachtet wird, als auch dann, wenn sie mittels eines Videorecorders aufgezeichnet werden soll.

Im letztgenannten Fall kann das beanspruchte Steuersignal S bereits bei der Vorprogrammierung des Videorecorders zur Aufzeichnung der gewünschten Sendung vorgegeben und zusammen mit den weiteren Vorprogrammierdaten in einem Speicher des Videorecorders abgelegt werden.

Zusammenfassend betrachtet bietet die beanspruchte Einrichtung als Ergänzung zu dem aus der EP-A-0 239 760 bekannten Verfahren die Möglichkeit, bei Bedarf kurzfristig und individuell für jede Sendung die Prioritätsprogrammierung umgehen zu können, um momentanen Wünschen bezüglich Untertitelung oder Nichtuntertitelung besser gerecht zu werden.

**Patentansprüche**

1. Einrichtung zur Decodierung von ein Bildsignal und verschiedensprachige Sprachinformation enthaltenden Satelliten-Fernsehsignalen, bei der infolge einer Prioritätsprogrammierung automatisch eine der angebotenen Sprachinformationen herausgesucht und in akustischer Form wiedergegeben wird, mit einer Schaltung zur Decodierung einer weiteren Sprachinformation, die in einer mit dem Satelliten-Fernsehsignal übertragenen Videotextseite enthalten ist, und zur Einblendung der weiteren, decodierten Sprachinformation als Untertitel in das Bildsignal, **dadurch gekennzeichnet,** daß der Schaltung (2) ein durch Betätigung eines Fernbedienungsgebers vorgegebenes Steuersignal (S) zugeführt wird, und die Schaltung (2) bei einem ersten Zustand des Steuersignals (S) die weitere, decodierte Sprachinformation als Untertitel in das Bildsignal einblendet und bei einem zweiten Zustand des Steuersignals (S) die Einblendung von Untertiteln unterbindet und das Steuersignal (S) eine die gewünschte Videotextseite spezifizierende Information enthält.

2. Einrichtung nach Anspruch 1, **dadurch gekennzeichnet,** daß sie in einem Videorecorder angeordnet ist, die Vorgabe des Steuersignals im Rahmen der Aufzeichnungsprogrammierung erfolgt und für jedes einzelne Aufzeichnungsereignis individuell festlegbar ist.

3. Einrichtung nach einem der Ansprüche 1 - 2, **dadurch gekennzeichnet,** daß das Steuersignal (S) dem Videotextdecoder (21) der Schaltung (2) zugeführt wird.

**Claims**

1. Device for decoding satellite television signals containing a picture signal and multilingual voice information, in which as a consequence of a priority programming one of the language information items provided is automatically searched out and reproduced in audible form, comprising a circuit for decoding another language information item which is contained in a teletext page transmitted together with the satellite television signal, and for inserting the further decoded language information item as subtitle into the picture signal, characterised in that the circuit (2) is provided with a control signal (S) predetermined by operating a remote control transmitter, and the circuit (2) inserts the further decoded language information item as subtitle into the picture signal in a first state of the control signal (S) and suppresses the insertion of subtitles in a second state of the control signal (S) and the control signal (S) contains an information item specifying the desired teletext page.

2. Device according to Claim 1, characterised in that it is arranged in a video recorder, the control signal is predetermined during the programming of recording and can be individually established for each individual recording event.

3. Device according to one of Claims 1-2, characterised in that the control signal (S) is supplied to the teletext decoder (21) of the circuit (2).

## Revendications

1. Dispositif pour décoder des signaux de télévision transmis par satellite, qui contiennent un signal d'image et une information parlée en différentes langues, dans lequel, en raison d'une programmation de priorités, l'une des informations parlées proposées est recherchée de façon automatique et reproduite sous forme acoustique, et comportant un circuit pour décoder une autre information parlée, qui est contenue dans une page de vidéotex transmise avec le signal de télévision transmis par satellite, et servant à insérer l'autre information parlée décodée, en tant que sous-titres dans le signal d'image, caractérisé en ce qu'un signal de commande (S) prédéterminé par l'actionnement d'un générateur de télécommande est envoyé au circuit (2) et que, lorsque le signal de commande (S) est dans un premier état, le circuit (2) introduit l'autre information parlée décodée en tant que sous-titre dans le signal d'image et, lorsque le signal de commande (S) est dans un second état, il supprime l'insertion de sous-titres, et le signal de commande (S) contient une information spécifiant la page de vidéotex désirée.

2. Dispositif selon la revendication 1, caractérisé en ce qu'il est disposé dans un enregistreur vidéo, que la prédétermination du signal de commande est exécutée dans le cadre de la programmation d'enregistrement et peut être déterminée individuellement pour chaque évènement d'enregistrement.

3. Dispositif selon l'une des revendications 1-2, caractérisé en ce que le signal de commande (S) est envoyé au décodeur de vidéotex (21) du circuit (2).

E

MAC-Dec.

1

B A

VT-Dec.

S1

Einblendsch.

21

22

2

S

C